# EUROPEAN PATENT APPLICATION

(11) **EP 2 236 950 A1**
(43) Date of publication of application: **06.10.2010**
(21) Application number: 08856186.5
(22) Date of filing: 11.08.2008
(51) Int. Cl.: F24F 6/00, C02F 1/30, C02F 1/46, F24F 6/04

(54) **HUMIDIFIER**

(30) Priority: 06.12.2007 JP 2007315339
(71) Applicant: Sharp Kabushiki Kaisha, Osaka-shi Osaka 545-8522 (JP)
(72) Inventor: IKEMIZU, Mugihei, Osaka-shi, Osaka 545-8522 (JP)
(74) Representative: Treeby, Philip David William
(86) International application number: PCT/JP2008/064400
(87) International publication number: WO 2009/072324

(57) **Abstract**

Provided is a humidifier (1) capable of enhancing microbicidal and antimicrobial effects of a vaporizing part therein. The humidifier (1) comprises: a humidifying filter (500) for vaporizing water; and a light irradiating part (700) for irradiating with light the vaporizing part (500) having applied thereto the water to be vaporized, and the water vaporized from the vaporizing part (500) includes silver ions.

## Description

### TECHNICAL FIELD

The present invention relates to a humidifier.

### BACKGROUND ART

Conventionally, a humidifier having a configuration including a water storage part for storing water and a vaporizing part (humidifying part) for vaporizing water stored in the water storage part has been used. As a humidifying method employed in the vaporizing part, there have been known a heating method in which water is heated and vaporized; an atomizing method in which water is released into air in an atomized manner by means of ultrasonic waves or the like and vaporized; and a vaporizing method in which air is caused to pass through a humidifying filter (vaporizing filter) having water absorbed therein and the water in the humidifying filter is vaporized.

As described above, since the water is left inside a humidifier at a room temperature for a long period of time, there may arise a problem of propagation of microbes and a problem of odor generation caused by the propagation of microbes. In particular, in the vaporizing-type humidifier, the humidifying filter is required to hold moisture in order to ensure humidifying performance, and in addition, it is required to cause the humidifying filter to contact outside air by blowing the outside air, thereby causing a problem that the microbes easily propagate on the humidifying filter and the like.

As a humidifier solving the above-mentioned problems, in Japanese Patent Application Laid-Open Publication No. 2006-3042 (Patent Document 1), a humidifier in which a vaporizing filter carrying a photocatalyst such as a titanium oxide is irradiated with ultraviolet rays is described. While this humidifier is in operation or after the operation of the humidifier is stopped, when the vaporizing filter is irradiated with the ultraviolet rays, microbicidal action is exhibited in portions thereof which are irradiated with the ultraviolet rays.

In addition, in Japanese Patent Application Laid-Open Publication No. 2003-322368 (Patent Document 2), a humidifier in which silver ions are eluted into water in a water tank is described. The water in the water tank is absorbed as moisture by a vaporizing filter and vaporized.

In addition, in Japanese Patent Application Laid-Open Publication No. 2001-89968 (Patent Document 3), antimicrobial acrylonitrile-based fiber which contains a metal compound, such as a silver-based compound, having antimicrobial activity and has photocatalytic activity is described.
Patent Document 1: Japanese Patent Application Laid-Open Publication No. 2006-3042
Patent Document 2: Japanese Patent Application Laid-Open Publication No. 2003-322368
Patent Document 3: Japanese Patent Application Laid-Open Publication No. 2001-89968

### DISCLOSURE OF THE INVENTION

### Problems to be solved by the invention

In the humidifier described in Japanese Patent Application Laid-Open Publication No. 2006-3042 (Patent Document 1), however, scale is deposited on a surface of the vaporizing filter, and when the surface of the vaporizing filter is covered by the scale, exhibiting a microbicidal effect is hindered. In water such as tap water used in the humidifier and adsorbed into the vaporizing filter, dissolved components such as an electrolyte are present. Because on the vaporizing filter, moisture is vaporized, these dissolved components are deposited as the scale on the humidifying filter. When the surface of the vaporizing filter is covered by the scale as mentioned above, light is hindered from reaching the surface of the vaporizing filter, thereby making it impossible to irradiate the vaporizing filter with the light and to exhibit an effect of the photocatalyst which the vaporizing filter carries. Therefore, in addition to the problem of the propagation of the microbes on the vaporizing filter, there arises a problem that propagation of microbes also on portions of scale, which are present on the vaporizing filter, cannot be suppressed.

In addition, in a case of the humidifier described in Japanese Patent Application Laid-Open Publication No. 2003-322368 (Patent Document 2), it is required to increase a concentration of silver ions dissolved in the water in the water tank in order to attain a sufficient microbicidal effect, and to this end, it is required to use a large amount of silver. When the large amount of silver is used, not only a problem of an increase in costs arises but also an amount of deposits on the vaporizing filter is increased, whereby it is likely that these deposits adversely affect humidifying performance.

Moreover, in a case of the antimicrobial acrylonitrile-based fiber described in Japanese Patent Application Laid-Open Publication No. 2001-89968 (Patent Document 3), since silver ions or components including silver cannot be eluted into water, it is only on a surface of the fiber that antimicrobial action can be obtained.

Therefore, an object of the present invention is to provide a humidifier capable of enhancing sterilization and antimicrobial effects of a vaporizing part therein.

### Means for solving the problems

A humidifier according to the present invention comprises: 1 a vaporizing part for vaporizing water; and a light irradiating part for irradiating with light the vaporizing part having applied thereto the water to be vaporized, and the water vaporized from the vaporizing part includes silver ions.

The water including the silver ions is vaporized from the vaporizing part and thereby, silver is deposited on a surface of the vaporizing part. The light irradiating part irradiates the vaporizing part with the light and thereby, a microbicidal effect of the silver deposited on the surface of the vaporizing part can be enhanced. In addition, also in a case where the surface of the vaporizing part is covered by scale, since the water vaporized from the vaporizing part includes the silver ions, the silver is deposited on the surface of the vaporizing part, with the silver mixed with the scale covering the surface of the vaporizing part, and the silver is deposited on an outside of the scale when the water including the silver ions is vaporized from the vaporizing part. Through the above-described implementation, even when the surface of the vaporizing part is covered with the scale, the silver deposited on the vaporizing part can be irradiated with the light, thereby allowing the antimicrobial action and microbicidal action of the silver to be enhanced. Moreover, an amount of the used silver can be reduced. Furthermore, even if the silver deposited on the vaporizing part is washed out by cleaning the vaporizing part, when the water including the silver ions is thereafter vaporized from the vaporizing part, the silver is newly deposited on the surface of the vaporizing part. Therefore, sterilization action, antimicrobial action, and microbicidal action of the vaporizing part are not lost even when the vaporizing part is cleaned.

Through the above-described implementation, the humidifier capable of enhancing the sterilization and antimicrobial effects of the vaporizing part therein can be provided.

It is preferable that the humidifier according to the present invention comprises electrodes including silver and the silver ions are silver ions eluted from the electrodes through electrolysis.

Through the above-described implementation, an amount of the eluted silver ions and whether or not the elution is conducted can be controlled. By controlling an amount of the eluted silver ions, the silver can be supplied with neither excess nor shortage. In addition, also by controlling whether or not the elution is conducted, an amount of the used silver can be saved. In addition, since the silver ions can be obtained by employing the electrolysis method, an enhanced effect can be attained through the irradiation of the light, as compared with silver ions obtained by employing other methods.

It is preferable that in the humidifier according to the present invention, the light irradiated by the light irradiating part includes visible light.

Through the above-described implementation, the microbicidal action can be more enhanced. In addition, deterioration of resins or the like of the vaporizing part and inside the humidifier due to irradiation of ultraviolet rays can be prevented.

It is preferable that the humidifier according to the present invention comprises: a water storage part for storing the water supplied to the vaporizing part; and a water storage part light irradiating part for irradiating with the light the water stored in the water storage part, and the water stored in the water storage part includes the silver ions.

Through the above-described implementation, the microbicidal action of the silver ions included in the water stored in the water storage part can be enhanced.

It is preferable that the humidifier according to the present invention comprises: a water storage part for storing the water supplied to the vaporizing part; a water storage part light irradiating part for irradiating with the light the water stored in the water storage part; and a water supplying part for sending the water stored in the water storage part to the vaporizing part.

Through the above-described implementation, it is made possible to arrange the water storage part and the vaporizing part so as to be away from each other, thereby allowing a degree of design freedom to be heightened.

### EFFECT OF THE INVENTION

As described above, according to the present invention, a humidifier capable of enhancing sterilization and antimicrobial effects of a vaporizing part therein can be provided.

### BRIEF DESCRIPTION OF THE DRAWINGS

Fig. 1 is a perspective view in which a humidifier of one embodiment according to the present invention is viewed from a front side thereof.
Fig. 2 is an exploded perspective view in which the humidifier of the one embodiment according to the present invention is viewed from a rear side.
Fig. 3 is a schematic diagram showing a configuration of an inside of the humidifier of the one embodiment according to the present invention and a control relationship.
Fig. 4 is a perspective view illustrating a water supply tank in the humidifier of the one embodiment according to the present invention.
Fig. 5 is a perspective view illustrating a tray in the humidifier of the one embodiment according to the present invention.
Fig. 6 is a cross-sectional view taken from a line VI-VI as indicated in a drawing of the humidifier shown in Fig. 5.
Fig. 7 is a schematic diagram schematically illustrating an electrolysis part in the humidifier of the one embodiment according to the present invention.
Fig. 8 is a graph showing a relationship between respective silver amounts applied to test samples and the numbers of bacteria existing in the test samples.
Fig. 9 is a graph showing a relationship between illuminances of a white fluorescent lamp and the numbers of bacteria existing in the test samples.
Fig. 10 is a graph showing a relationship between lapses of time and the numbers of bacteria existing in the test samples.
Fig. 11 is a graph showing a relationship between kinds of methods of generating silver ions to be applied and the numbers of bacteria existing in the test samples.
Fig. 12 is a graph showing a relationship between respective silver ion concentrations with and without light irradiation and the numbers of bacteria.

### EXPLANATION OF REFERENCE NUMERALS

1: humidifier, 320: water storage part, 500: humidifying filter, 611,612: electrode, 700: light irradiating part.

### BEST MODE FOR CARRYING OUT THE INVENTION

Hereinafter, an embodiment of the present invention will be described with reference to drawings.

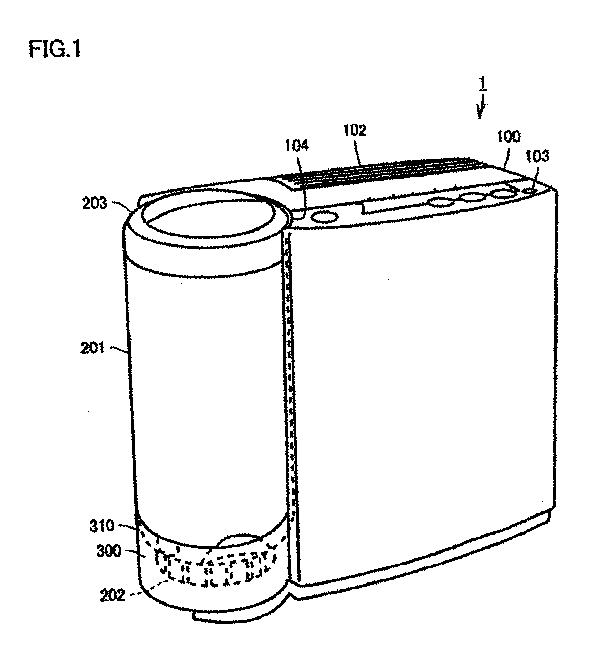

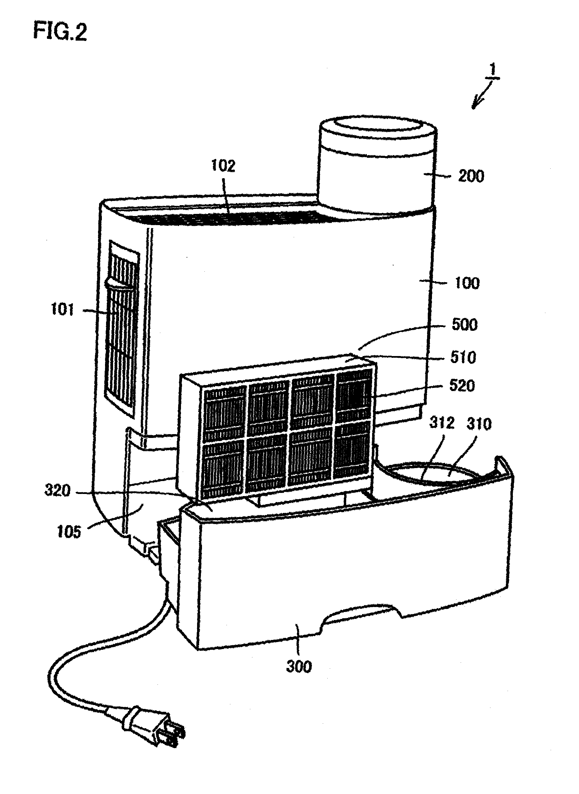

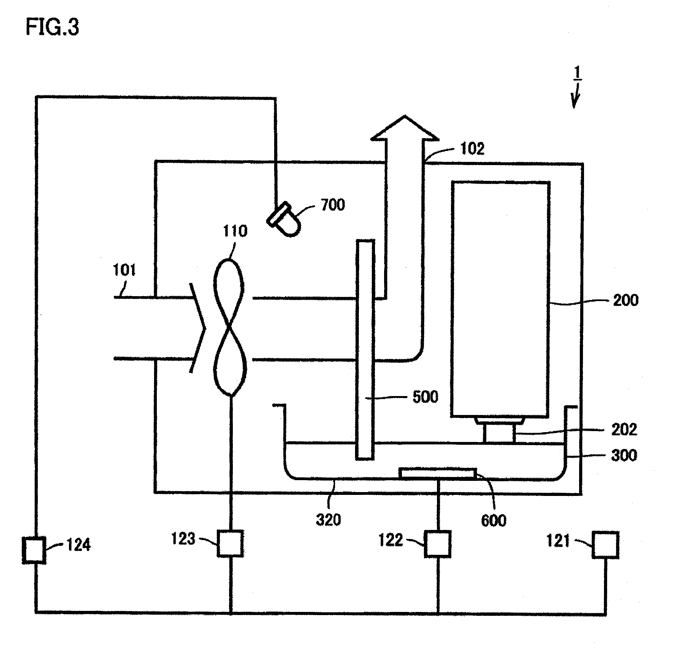

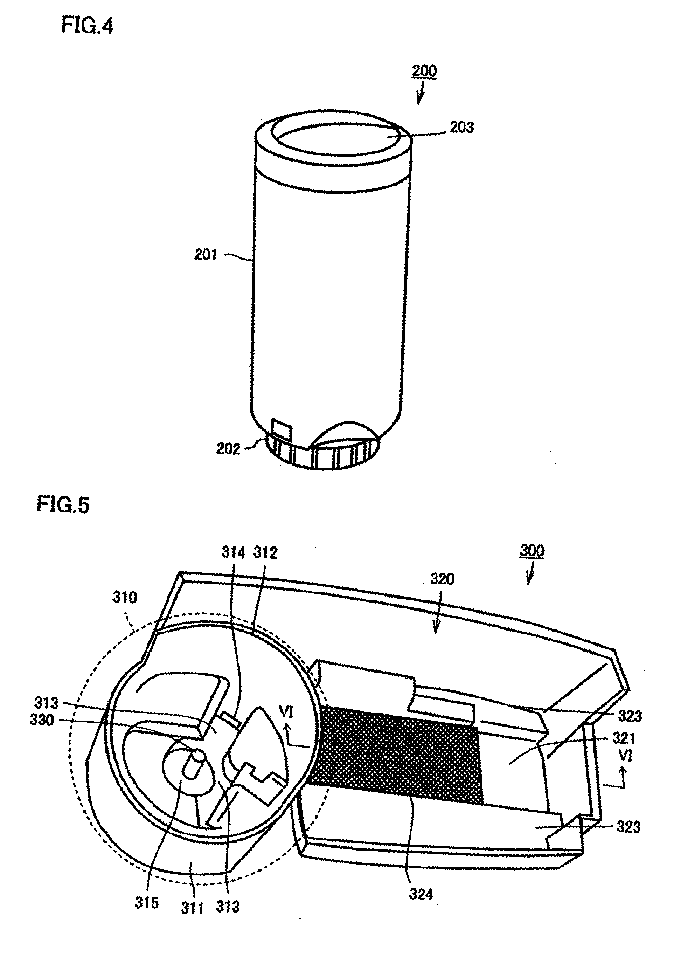

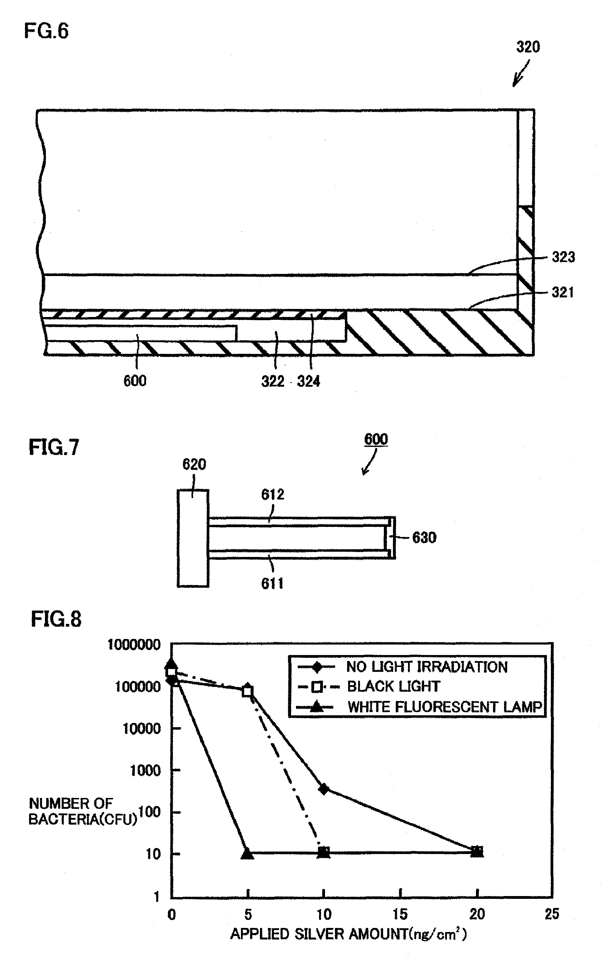

With reference to Fig. 1 through Fig. 7, a configuration of a humidifier of one embodiment according to the present invention will be described. Fig. 1 is a perspective view in which the humidifier of the one embodiment according to the present invention is viewed from a front side thereof. Fig. 2 is an exploded perspective view in which the humidifier of the one embodiment according to the present invention is viewed from a rear side. Fig. 3 is a schematic diagram showing a configuration of an inside of the humidifier and a control relationship. Fig. 4 is a perspective view illustrating a water supply tank. Fig. 5 is a perspective view illustrating a tray. Fig. 6 is a cross-sectional view taken from a line VI-VI as indicated in the drawing of the humidifier shown in Fig. 5. Fig. 7 is a schematic diagram schematically illustrating an electrolysis part of the humidifier.

As shown in Fig. 1 through Fig. 3, the humidifier 1 of the one embodiment according to the present invention mainly comprises; a main body 100; a water supply tank 200; a tray 300 having a water storage part 320; a humidifying filter 500 as a vaporizing part; a fan 110; an electrolysis part 600 (refer to Fig. 6 and Fig. 7); a light irradiating part 700; and controllers 121 through 124. The humidifying filter 500 and the fan 110 constitute a humidifying part for vaporizing water in the humidifier 1.

As shown in Fig. 1, on one side surface side of the main body 100, a space for attaching the water supply tank 200 is formed. As shown in Fig. 2, in a lower portion of the main body 100, a space (tray attaching part 105) for attaching and detaching the tray 300 to and from a rear surface side of the main body 100 is provided. On another side surface side of the main body 100, a suction port 101 having vertical slits is provided. Inside the main body 100, an air filter (not shown) is provided in a position facing the suction port 101. On an upper portion of a front surface side of the main body 100, an operation part 103 in which various buttons are formed is provided. On an upper portion of the rear surface side of the main body 100, a blowout port 102 having a plurality of slits spanning from the one side surface side to the another side surface side is provided.

As shown in Fig. 2 and Fig. 3, the humidifying filter 500 constitutes the humidifying part for vaporizing water stored in the tray 300. The humidifying filter 500 is attached in the tray attaching part 105 of the main body 100 in a state where the humidifying filter 500 is housed inside the water storage part 320 of the tray 300. In the humidifying filter 500, inside a frame of a filter case 510 which is a frame body having a rectangular parallelepiped shape, a filter 520 which is formed of nonwoven fabric made of a fibrous polyester resin and is shaped so as to be repeatedly folded up into concertinas is housed.

As shown in Fig. 3, the light irradiating part 700 is arranged so as to irradiate the humidifying filter 500 with light and connected to the controller 124. The light irradiating part 700 is used also as a water storage part light irradiating part for irradiating water stored in the water storage part 320 with light. The controller 124 controls an operation of the light irradiating part 700.

As the light irradiating part 700, a fluorescent lamp, an electric bulb, a light emitting diode (LED), or the like can be used. The light irradiating means may be a light source, such as a microbicidal lamp and an ultraviolet (UV) lamp, which mainly includes light in an ultraviolet region; a light source, such as a black light applying near ultraviolet rays, which mainly includes light in a near ultraviolet region; or a light source, such as a halogen heater, which mainly includes light in an infrared region. However, it is preferable that a light source, such as a fluorescent lamp, an incandescent lamp, a light emitting diode (LEDs having colors such as white, blue, red, and green), and a visible light laser, which mainly includes visible light is used.

As shown in Fig. 3 and Fig. 4, the water supply tank 200 is to supply water to the tray 300 and is attachable to and detachable from the main body 100. On an upper portion of a container 201 of the water supply tank 200, a hand hold part 203 used when a user holds the water supply tank 200 to attach and detach the water supply tank 200 to and from the main body 100 is provided. A lid part 202 of the water supply tank 200 is attachable to and detachable from an opening part formed on a lower portion of the container 201. The lid part 202 is provided with a groove (not shown). When the water supply tank 200 in a state where the lid part 202 has been attached to the container 201 is attached to the tray 300, water is supplied via the groove of the lid part 202 from the container 201 to the tray 300.

As shown in Fig. 5, the tray 300 has the water storage part 320 for storing water and is attachable to and detachable from the main body 100. The tray 300 is an integrally molded part which is made of a resin and includes a tank insertion part 310 having a bottomed cylindrical shape and the water storage part 320 having a tray-shape. In addition, the tray 300 is attached to the tray attaching part 105 (refer to Fig. 2) of the main body 100.

On one side surface side of the tray 300 (on a left side in Fig. 5), the tank insertion part 310 having the cylindrical shape is formed. When the tray 300 is attached to the tray attaching part 105, on the one side surface of the main body 100, the tank insertion part 310 is exposed outside the main body 100, and inside the main body 100, the water storage part 320 is housed. In addition, a tank attaching wall 104 formed above the tray attaching part 105 on the one side surface of the main body 100 and an arc-shaped wall 312 of the tank insertion part 310 of the tray 300 are connected to each other, and thereby, a columnar tank attaching part for attaching the water supply tank 200 is formed in a space inside and above the tank insertion part 310.

Around the tank insertion part 310, a wall 311 having a semicircular shape and the arc-shaped wall 312 which is connected to the wall 311 and has a height greater than a height of the wall 311 are provided. On a bottom surface of the tank insertion part 310, a water channel 313 is formed in a region which has the lowest height, and a circular pedestal 315 is formed in a region which has a height higher than that of the water channel 313. On a bottom portion of the arc-shaped wall 312, an opening 314 is provided in a boundary between the tank insertion part 310 and the water storage part 320, and the water channel 313 communicates with an inside of the water storage part 320 via the opening 314. On the circular pedestal 315, a cylindrical column 330 is provided. When the water supply tank 200 is attached to the tray 300, the cylindrical column 330 presses down the lid part 202, water in the water supply tank 200 flows into the tank insertion part 310 via the groove of the lid part 202, the inflowing water flows through the water channel 313 and the opening 314, and the water is stored in the water storage part 320.

As shown in Fig. 5 and Fig. 6, on the bottom surface of the water storage part 320, in a substantially middle position between a front surface side and a rear surface side, a recess part 322 whose planar shape is rectangular is provided so as to span from the tank insertion part 310 to another side surface of the main body. On the recess part 322, a lid part 324 which has a cavity so as to allow water to permeate downward, is net-like, and is made of a resin is arranged. The lid part 324 and a bottom surface part 321 are positioned on the same plane. A plane which the bottom surface part 321 and the lid part 324 constitute is recessed with respect to a projecting part 323 and forms a filter attaching part for attaching the humidifying filter 500. In other words, the humidifying filter 500 is infixed between the projecting part 323 and the plane which the bottom surface part 321 and the lid part 324 constitute.

As shown in Fig. 6, in the recess part 322 formed below the net-like lid part 324, the electrolysis part 600 is provided. The electrolysis part 600 is to operate to add metal ions to water stored in the tray 300. The electrolysis part 600 is connected by electrical wiring (not shown) to the controller 122 (refer to Fig. 3) for causing the electrolysis part 600 to operate and to the controller 121 (refer to Fig. 3) for controlling an operation of the humidifier 1.

In the humidifier 1 of the present embodiment, the tray 300 is structured so as to be attachable to and detachable from the main body 100. Electricity supplied to the electrical wiring (not shown) connected to the electrolysis part 600 is supplied from the main body 100 through contactless power transmission via a coil or by using a connector or the like.

As shown in Fig. 3 and Fig. 7, the electrolysis part 600 is to operate to add sterilization ions to the water stored in the water storage part 320 through electrolysis. Although a place where the electrolysis part 600 is arranged is not particularly limited and it is only required to allow the addition of the generated metal ions to the water stored in the water storage part 320, the electrolysis part 600 is arranged so as to contact the stored water stored in the present embodiment.

In the present embodiment, as shown in Fig. 7, electrodes 611 and 612, each of which includes two pieces of platy metal, are arranged inside the electrolysis part 600 so as to be spaced. The electrodes 611 and 612 are connected via an electrode terminal housing 620 to the electrical wiring (not shown) and is electrically controlled in accordance with an applied voltage. In order to avoid a short circuit in the electrodes 611 and 612, a spacer 630 for keeping a fixed space between the electrodes 611 and 612 is provided. When water has been supplied to the water storage part 320, by applying an voltage between the electrodes 611 and 612, the metal ions are eluted inside the electrolysis part 600, thereby imparting the sterilization and antimicrobial effects to the water stored in the water storage part 320.

The electrolysis part 600 is an electrolysis part for dissolving a material of which the electrodes 611 and 612 are made. In addition, the electrolysis part 600 is formed so as to generate silver ions, and at least one of the electrodes 611 and 612 is formed of a material which includes silver. When the electrode including the silver becomes an anode, the below-mentioned reaction (Expression 1) is caused, and the silver ions (Ag⁺) as a silver based antimicrobial agent are eluted in the water stored in the water storage part 320.

Ag→Ag⁺+e⁻ (Expression 1)

The metal of which the electrodes are formed is not limited to pure silver, and it is only required for the metal to include silver. From the electrode(s) including the silver, the silver ions are eluted through application of a voltage. These eluted silver ions are excellent in the microbicidal effect.

As a material used in a silver ion eluting method, a structure made of zeolite, silicagel, glass, calcium phosphate, zirconium phosphate, silicate, titanium oxide, whisker, ceramics, or the like which carries the silver ions; or a resin, a fabric, or the like which includes each of the above-mentioned substances can be cited. In addition, a silver compound such as a silver nitrate and a silver chloride may be dissolved and used.

However, since by employing the electrolysis method, an amount of the eluted silver ions is approximately proportional to a quantity of electricity flowing between the electrodes, the amount of the eluted silver ions can be controlled. In addition, the microbicidal action is not invariably needed. Since propagation of microbes occurs in the order of several hours, the electrolysis may be conducted, for example, once every other hour. In a case where the elution of the silver ions is controlled in the above-mentioned manner, irradiation of light is stopped once every other hour, and the elution of the silver is stopped by stopping the electrolysis. In addition, in a case where the silver ions, whose amount value is greater than or equal to a predetermined value, remains, only the irradiation of the light may be conducted. The elution of the silver and the irradiation of the light may be separately conducted in each individual sequence. As described above, by controlling the irradiation of the light and the operation of the electrolysis, an amount of the used silver can be saved.

In addition, when the humidification is continuously performed, the silver is sufficiently supplied also to the humidifying filter 500 and the effect owing to the irradiation of the light can be sufficiently attained, thereby suppressing the propagation of the microbes. Therefore, in a case where an operating time is longer than a predetermined time, an amount of the elution may be decreased. The elution of the silver is conducted by employing the electrolysis method, thereby facilitating such control.

Next, with reference to Fig. 1 through Fig. 7, an operation of the humidifier 1 of the present embodiment will be described.

As shown in Fig. 1 through Fig. 5, the water supply tank 200 holding the water thereinside is attached to the tank attaching wall 104 of the main body 100 and the tank insertion part 310 of the tray 300. The groove of the lid part 202 of the water supply tank 200 and the opening 314 (refer to Fig. 5) of the tank insertion part 310 of the tray 300, the water inside the water supply tank 200 is supplied to the water storage part 320. The supplied water is stored in the water storage part 320 and the humidifying filter 500 is caused to suck in the stored water.

In the above-mentioned state, when by using the operation part 103 of the main body 100, or through a timer-operation, or based on a result of detection conducted by using a humidity detection device or the like, the humidifier 1 is powered on, the operation of the humidifying part is started. In the present embodiment, as shown in Fig. 3, the fan 110 is started up by the controller 123; air sucked from the suction port 101 of the main body 100 is sent to the humidifying filter 500 by the fan 110; the water sucked in the humidifying filter 500 is quickly vaporized; and air including the vaporized water is discharged from the blowout port 102. Although due to this vaporization, moisture is lost from the humidifying filter 500, the humidifying filter 500 sucks water from the water storage part 320 as needed. In addition, water is supplied to the water storage part 320 from the water supply tank 200 as needed so as to maintain a constant water level in the water storage part 320. In the above-described manner, the humidifier 1 and the humidifying part operate. At this time, the silver ions included in the water stored in the water storage part 320 adhere to and are carried by the humidifying filter 500.

Although in the present embodiment, the humidifying filter 500 sucks the water stored in the water storage part 320 and thereby, the water is supplied, the humidifier may have a configuration in which a pump is used as a water supplying part for sending the water stored in the water storage part 320 to the humidifying filter 500 and a configuration in which a free water overfall device utilizing a difference between a height at which the water storage part 320 is arranged and a height at which the humidifying filter 500 is arranged or the like is used as a water supplying part to send the water to the humidifying filter 500 and the water is diffused. In a case where the humidifier is configured as mentioned above, it is not required to arrange the water storage part 320 and the humidifying filter 500 so as to directly abut each other and it is also made possible to arrange the water storage part 320 and the humidifying filter 500 so as to be away from each other, thereby allowing a degree of design freedom to be heightened. Such a configuration is suited particularly when applied to a large air conditioning system, not an integral-type humidifier. In a case where the humidifier is configured as mentioned above, it is required to provide each of the water storage part 320 and the humidifying filter 500 with a light irradiating part, respectively.

As described above, in the humidifier 1 according to the present invention, the silver ions are dissolved in the water stored in the water storage part 320, the humidifying filter 500 is caused to suck the water, and the humidifying filter 500 is irradiated with light from the light irradiating part 700.

In the water stored in the water storage part 320, the silver ions are included through the electrolysis using the electrodes 611 and 612. The water stored in the water storage part 320 and including the silver ions is sucked to the humidifying filter 500,whereby the humidifying filter 500 is caused to include the silver derived from the silver ions. This silver is irradiated with the light, whereby an effect of enhancing the microbicidal action in the humidifying filter 500 can be exhibited.

In addition, this allows the silver to be deposited on a surface of the humidifying filter 500, with the silver mixed with scale adhering to the surface of the humidifying filter 500. Therefore, not only the microbicidal action against microbes propagating inside the scale can be exhibited but also the silver deposited on the surface of the scale is irradiated with the light, thereby enhancing the microbicidal action.

Since the irradiation of the light is conducted and thereby, the microbicidal effect of the silver can be enhanced, the light irradiating part 700 irradiates the humidifying filter 500 with the light, thereby allowing a reduction in an amount of the used silver, as compared with a case where the irradiation of the light is not conducted.

In general, performance of a humidifying filter of a vaporizing-type humidifier is reduced due to deposition of scale. Therefore, it is required to clean the humidifying filter periodically with a frequency of, for example, once every two weeks. However, in a case where the humidifying filter carries an antimicrobial agent or a photocatalyst, when the humidifying filter is cleaned, the antimicrobial agent or the photocatalyst is likely to drop off upon the cleaning. If the antimicrobial agent or the photocatalyst has droped off by the cleaning, even when the humidifying filter is irradiated with the light in a state where the antimicrobial agent or the photocatalyst has dropped off, an effect owing to action of the photocatalyst cannot be attained.

In a case of the humidifier 1 of the present embodiment, since the silver can be newly replenished to the humidifying filter 500 by the silver ions eluted in the water, even if the silver has dropped off from the humidifying filter 500 upon cleaning the humidifying filter 500, the silver is newly deposited on the surface of the humidifying filter 500 when in the humidifying filter 500, the water including the silver ions is vaporized and the newly deposited silver is irradiated with the light, thereby attaining the microbicidal effect on the surface of the humidifying filter 500.

In addition, in the present invention, as the light irradiating part 700, a light source including visible light is used. This allows attainment of an effect of enhancing the microbicidal action owing to the silver by utilizing the visible light. By utilizing the visible light, not ultraviolet rays, deterioration of resins or the like of the humidifying filter 500 and inside the humidifier 1 can be avoided.

In addition, in the present invention, as the silver ions, the silver ions eluted through the electrolysis are used. This allows control of an amount of the eluted silver ions and control of whether or not the elution is conducted.

Not only the silver can be supplied with neither excess nor shortage by controlling an amount of the eluted silver but also an amount of the used silver can be saved by controlling whether or not the elution is conducted. For example, the microbicidal action in the humidifying filter 500 is not invariably needed. Since propagation of microbes on the humidifying filter 500 occurs in the order of several hours, the electrolysis may be conducted, for example, once every other hour, thereby supplying the silver ions to the water in the water storage part 320. In a case where the elution of the silver ions is controlled in the above-mentioned manner, when the electrolysis is not conducted, irradiation of light can be stopped and the elution of the silver can be stopped by stopping the electrolysis. As described above, by controlling the irradiation of the light and the implementation of the electrolysis in an associated manner, an amount of the used silver can be saved.

In addition, since the elution of the silver is conducted by employing the electrolysis method, a great microbicidal action can be attained through the irradiation of the light, as compared with other methods.

As described above, the humidifier 1 comprises the humidifying filter 500 for vaporizing the water and the light irradiating part 700 for irradiating with the light the humidifying filter 500 to which the water to be vaporized has adhered, and the water to be vaporized from the humidifying filter 500 includes the silver ions.

The water including the silver ions is vaporized from the humidifying filter 500 and thereby, the silver is deposited on the surface of the humidifying filter 500. The light irradiating part 700 irradiates the humidifying filter 500 with the light and thereby, the microbicidal effect of the silver deposited on the surface of the humidifying filter 500 can be enhanced. In addition, also in a case where the surface of the humidifying filter 500 is covered by the scale, since the water vaporized from the humidifying filter 500 includes the silver ions, the silver is deposited on the surface of the humidifying filter 500, with the silver mixed with the scale covering the surface of the humidifying filter 500, and the silver is deposited on an outside of the scale when the water including the silver ions is vaporized from the humidifying filter 500. Through the above-described implementation, even when the surface of the humidifying filter 500 is covered with the scale, the silver deposited on the humidifying filter 500 can be irradiated with the light, thereby allowing the antimicrobial action and microbicidal action of the silver to be enhanced. Moreover, an amount of the used silver can be reduced. Furthermore, even if the silver deposited on the humidifying filter 500 is washed out by cleaning the humidifying filter 500, when the water including the silver ions is thereafter vaporized from the humidifying filter 500, the silver is newly deposited on the surface of the humidifying filter 500. Therefore, sterilization action, antimicrobial action, and microbicidal action of the humidifying filter 500 are not lost even when the humidifying filter 500 is cleaned.

Through the above-described implementation, the humidifier 1 capable of enhancing the microbicidal and antimicrobial effects of the humidifying filter 500 can be provided.

In addition, the humidifier 1 comprises the electrodes 611 and 612 including the silver, and the silver ions are silver ions eluted from the electrodes 611 and 612 through the electrolysis.

Through the above-described implementation, an amount of the eluted silver ions and whether or not the elution is conducted can be controlled. By controlling an amount of the eluted silver ions, the silver can be supplied with neither excess nor shortage. In addition, also by controlling whether or not the elution is conducted, an amount of the used silver can be saved. In addition, since the silver ions can be obtained by employing the electrolysis method, an enhanced effect can be attained through the irradiation of the light, as compared with silver ions obtained by employing other methods.

In addition, in the humidifier 1, the light irradiated by the light irradiating part 700 includes the visible light.

Through the above-described implementation, the microbicidal action can be more enhanced. In addition, deterioration of resins or the like of the humidifying filter 500 and inside the humidifier 1 due to irradiation of ultraviolet rays can be prevented.

In addition, the humidifier 1 comprises the water storage part 320 for storing the water supplied to the humidifying filter 500 and the light irradiating part 700 for irradiating the water stored in the water storage part 320 with the light, and the water stored in the water storage part 320 includes the silver ions.

Through the above-described implementation, the microbicidal action of the silver ions included in the water stored in the water storage part 320 can be enhanced.

### EXAMPLES

As an example of an effect attained by the humidifier according to the present invention, a microbicidal effect of a resin to which silver derived from silver ions had been caused to adhere and a microbicidal effect attained when a resin to which silver had been caused to adhere was irradiated with light were investigated. As one example of a substance to be sterilized, polyester was used, silver ions were applied to the polyester and thereafter, the polyester was irradiated with various kinds of light, whereby presence or absence of a microbicidal effect was investigated.

The test sample used in this test was obtained by applying silver ion water to polyester formed so as to be flat-plate-shaped and drying the polyester. The silver ion water was prepared by using tap water in the Yao city and eluting the silver ions from silver electrodes into the water through electrolysis. On the dried test sample, the silver derived from the silver ions was deposited as a residue on evaporation together with dissolved components in the tap water.

The test was conducted under three light irradiation conditions: irradiation by a white fluorescent lamp; irradiation by a black light; and no light irradiation. Silver amounts applied to a surface of the test sample were 0 (without a process of applying the silver ion water ), 5, 10, and 20 ng/cm². An antimicrobial test was conducted by employing a photoirradiation film contact method of "Society of Industrial Technology for Antimicrobial Articles". In this method, a bacterial suspension containing bacteria of approximately 1.0 × 10⁵ CFU are caused to adhere to a test sample, and after 24 hours has passed as an irradiation time, the number of bacteria are measured. As a kind of bacteria, Staphylococcus aureus was used. A white fluorescent lamp of 20W was used, and the sample was placed at a position where a light level (illuminance) in the vicinity of the sample, which was irradiated by the white fluorescent lamp, was 5000 lux. Similarly, a black light of 20W was used, and a distance between the light source and the sample was the same as that in a case of the fluorescent lamp.

The result is shown in Table 1 and Fig. 8. Table 1 shows a relationship between the respective light irradiation conditions and the numbers of bacteria (unit: CFU) obtained after the test in the test samples having the respective silver amounts applied. Fig. 8 is a graph showing a relationship between the respective silver amounts applied to the test samples and the numbers of bacteria existing in the test samples. The graph is plotted, assuming that an obtained value of the number of bacteria, which is less than or equal to a lower limit value (10 CPU), is 10.

**[Table 1]**

| | | Applied silver amount (ng/cm²) | | | |
|---|---|---|---|---|---|
| | | 0 | 5 | 10 | 20 |
| Light irradiation condition | No light irradiation | 1.4×10⁵ | 8.0×10⁴ | 3.4×10² | <10 |
| | Black light | 2.2×10⁵ | 7.1×10⁴ | <10 | <10 |
| | White fluorescent lamp | 3.4×10⁵ | <10 | <10 | <10 |

As shown in Table 1 and Fig. 8, even under the condition of no light irradiation, when the applied silver amount was 20 ng/cm², microbicidal action was recognized.

In addition, it can be seen that the microbicidal action is enhanced by the light irradiation. It was recognized that in the test sample with the applied silver amount of 10 ng/cm², the microbicidal action was enhanced by the irradiation with the black light and the white fluorescent lamp whereas under a condition that a small amount of silver, such as 5 ng/cm², was applied, the microbicidal action was further enhanced by the irradiation with the white fluorescent lamp mainly including visible light, rather than the irradiation with the black light mainly including near ultra violet light.

The residue on evaporation on the surface of each of the test samples was the silver ions dissolved in the water, which were deposited together with the dissolved components in the tap water, and it can be said that also in the humidifier, a substance similar to this residue on evaporation as scale was deposited on the humidifying filter. Accordingly, the effect attained by the irradiation of the light is similarly exhibited for the scale on the humidifying filter in the humidifier. In addition, since a proportion of the silver in the scale becomes constant by eluting into the water the silver ions with a constant concentration, even in a case where the deposited scale is extremely increased, the silver with a constant proportion is included in the scale, thereby exhibiting the microbicidal effect owing to the silver.

Under this condition, when the applied silver amount was 5 through 10 ng/cm², the attained microbicidal effect greatly differed according to whether or not the irradiation of the light was conducted, and when the applied silver amount was 20 ng/cm², the effect was sufficiently attained regardless of whether or not the irradiation of the light was conducted.

Accordingly, 5 through 10 ng/cm² of the silver is applied and the irradiation of the light is conducted, whereby the same degree of the effect as that attained when the applied silver amount is 20 ng/cm² can be attained and sterilization can be efficiently conducted with a small amount of the used silver. In order to control the applied silver amount as described above, it is required to control an amount of the eluted silver, and to this end, it is preferable that the elution of the silver is conducted by employing the electrolysis method.

In addition, the above-described enhancement of the microbicidal effect owing to the irradiation of the light cannot be attained by ordinary bulk metallic silver or silver compounds. This is an effect attained in a case where the silver ions are once dissolved in the water and deposited. As a reason for this, it is considered that the silver included in the deposit of the silver ion water is in a state of fine particles. Therefore, as in surface plasmons of nanoparticles, electrons are localized in the vicinity of surfaces thereof and interaction with light easily occurs. As a result, it is considered that in the silver in the deposit, such an effect of the light can be attained.

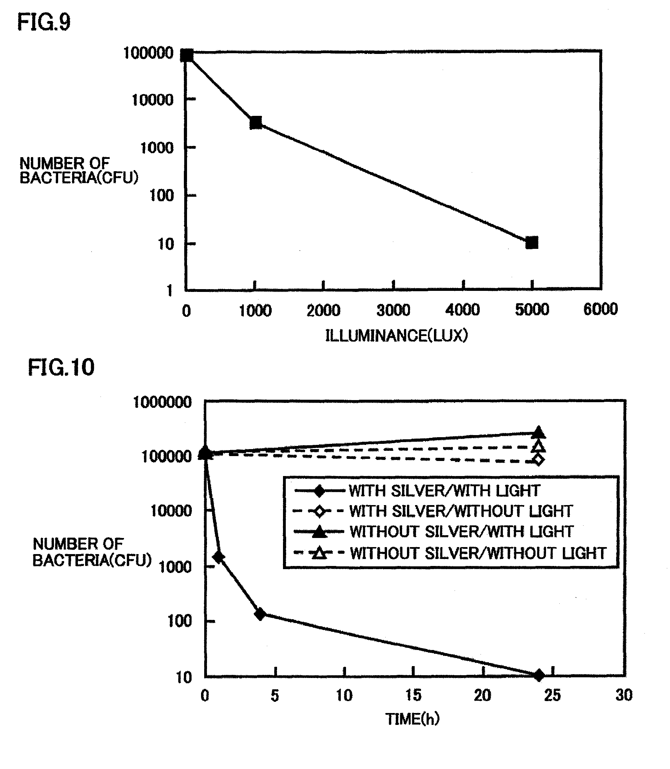

In addition, in the above-mentioned test, the test samples each having the silver amount of 5 ng/cm² applied thereto were irradiated with the light by using the white fluorescent lamp mainly including the visible light; an illuminance (lux) thereof was changed; and changes in the numbers of bacteria (unit: CFU) after the test were investigated. The result is shown in Fig. 9. Fig. 9 is a graph showing a relationship between illuminances of the white fluorescent lamp and the numbers of bacteria existing in the test samples.

As shown in Fig. 9, the number of bacteria obtained when no light irradiation was conducted was 8.0 × 10⁴ CFU; the number of bacteria obtained when the illuminance was 1000 lux was 3.20 × 10³ CFU; and the number of bacteria obtained when the illuminance was 5000 lux was approximately less than or equal to 10 CFU. As mentioned above, a change in the bactericidal action attained by the present invention, which depended on the light intensity (illuminance), was recognized. It can be seen that the material having the silver ions applied thereto is irradiated with the light of at least greater than or equal to a predetermined illuminance, whereby the bactericidal action can be further enhanced.

In addition, when the graph was examined, a two-digit decrease in the number of bacteria, as compared with that obtained when no light irradiation was conducted, resulted around 1900 lux. In the photoirradiation film contact method carried out this time, presence or absence of the antibacterial effect is determined based on whether or not a two-digit decrease in the number of bacteria is attained. This determination based on whether or not a two-digit decrease in the number of bacteria is attained is employed in the JIS Z2801, JIS L1902, or the like, and is used as a general criterion for determining the presence or absence of the antibacterial effect. Accordingly, from the viewpoint of enhancing the bactericidal action, it is desirable that irradiation of light of greater than or equal to a predetermined illuminance is conducted and it is more desirable that an illuminance at a position targeted for the irradiation is greater than or equal to 1900 lux.

Further, in the above-mentioned test, test samples each having a silver amount of 5 ng/cm² applied thereto were irradiated with light of an illuminance of 5000 lux by using the white fluorescent lamp mainly including the visible light; an irradiation time was changed (with silver and with light); and a change over time in the number of bacteria (unit: CFU), existing in each of the test samples, obtained after the test was investigated. In order to make a comparison, by using test samples each having a silver amount of 5 ng/cm² applied thereto, which were not irradiated with the light, and which thereafter underwent a lapse of time (with silver and without light); by using test samples each having no silver ions applied thereto, which were irradiated with light of an illuminance of 5000 lux by using the white fluorescent lamp, and which thereafter underwent a lapse of time (without silver and with light); and by using test samples each having no silver ions applied thereto, which were not irradiated with light, and which thereafter underwent a lapse of time (without silver and without light), changes over time in the numbers of bacteria were investigated. The result is shown in Fig. 10. Fig. 10 is a graph showing a relationship between the lapses of time and the numbers of bacteria existing in the test samples.

As shown in Fig. 10, it can be seen that in a case of the test samples each having the silver amount of 5 ng/cm² applied thereto, which were irradiated with the light of the illuminance of 5000 lux by using the white fluorescent lamp mainly including the visible light; and for which the irradiation time was changed (with silver and with light), the number of bacteria was decreased for a very short time period of the irradiation time (one hour). Accordingly, by conducting the irradiation of the light during the operation or the like of the humidifier, the microbicidal action can be enhanced.

Furthermore, in the above-mentioned test, in a case where a method of generating the silver ions applied to the test samples, which was different from the above-mentioned method, was employed, the numbers of bacteria (unit: CFU) obtained after the test were investigated. A test sample, which as similarly to in the method of generating the silver ions in the above-mentioned test, was prepared by using silver ion water (electrolysis silver ion water) obtained by eluting the silver ions into water through electrolysis (electrolyzation) from the silver electrodes immersed in the tap water, was used; a test sample, which was prepared by using silver ion water (AgCl solution) obtained by dissolving silver chloride (AgCl) as a reagent in water, was used; and a test sample, which was prepared by using silver ion water (Ag₂O solution) obtained by dissolving silver oxide (Ag₂O) as a reagent, was used.

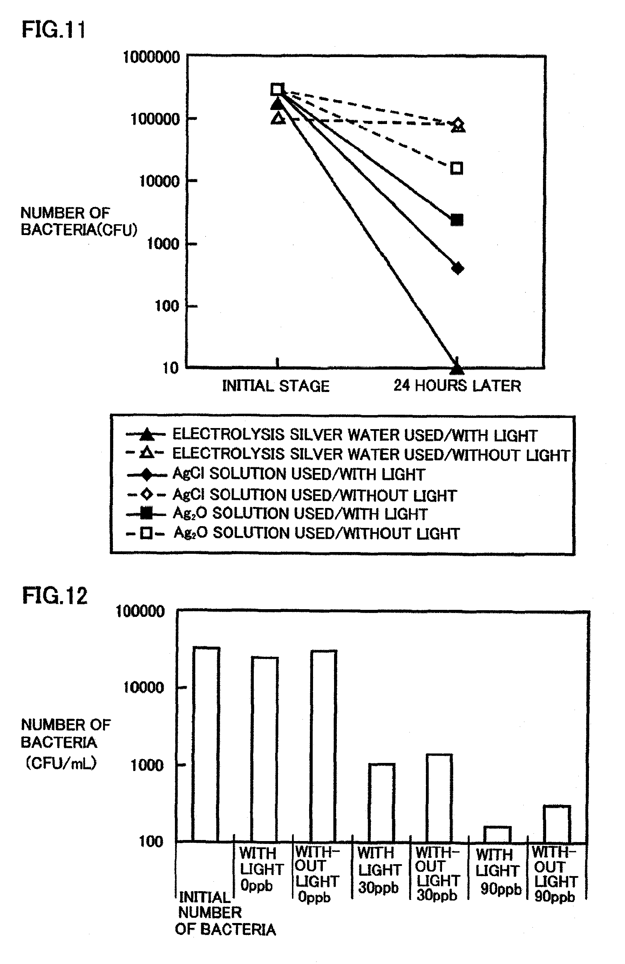

A concentration of the silver ions of each silver ion water was 900 µg/L. In addition, an amount of the silver which was applied to each of the test samples was 5 ng/cm². Each of the test samples was irradiated with the light of an illuminance of 5000 lux by using the white fluorescent lamp mainly including the visible light; each of the test samples underwent the irradiation for 24 hours; and thereafter, the number of bacteria was investigated. In order to make a comparison, each of the test samples was irradiated with no light; each of the test samples underwent a lapse of 24 hours; and thereafter, the number of bacteria was investigated. The result is shown in Fig. 11. Fig. 11 is a graph showing a relationship between kinds of the methods of generating the silver ions to be applied and the numbers of bacteria existing in the test samples.

As shown in Fig. 11, it can be seen that in the test sample to which the silver derived from the electrolysis silver ion water was applied by using the electrolysis silver ion water, an extent to which the number of bacteria was decreased after the light irradiation was large and the number of bacteria was decreased to the largest extent after the light irradiation, as compared with the test samples to which the silver was applied by using the AgCl solution and the Ag₂O solution. It is considered that since AgCl is dissolved such that up to approximately 1.5 mg/L of AgCl, as a concentration of the silver ions, which can be calculated from a solubility product of AgCl is dissolvable, Ag included in the AgCl solution is present as the silver ions and is in the same state as that of the silver ions eluted from an silver based antimicrobial agent. As described above, it can be seen that when the silver ions are eluted through the electrolysis, the sterilization can be more efficiently conducted than when the silver ions are eluted through other methods.

Conducted next was a test in which silver ion water having a bacterial suspension added therein was irradiated with light. As a light source for the light irradiation, the white fluorescent lamp was used and placed such that an illuminance at a position of the sample was 10,000 lux. The light irradiation was conducted for 10 minutes and Pseudomonas aeruginosa was used as a kind of bacteria. The silver ion water containing a predetermined number of the bacteria was put into a container through which the visible light can pass and the light irradiation was conducted for 10 minutes. In order to conduct at the same time a test in which no light irradiation was conducted, the same silver ion water containing the same bacteria was put into the same container, the container was covered with aluminum foil so as to completely block out the light, and under the same conditions other than the above-mentioned condition, the test was conducted. A temperature around the sample during the test was 26°C.

In addition, in this test, tap water which was subjected to autoclave sterilization was used and silver ion water obtained by eluting the silver ions into water through electrolysis (electrolyzation) from silver electrodes immersed in the tap water was used. Silver ion concentrations were 0, 30, and 90 ppb.

The result obtained from this test is shown in Fig. 12 and Table 2. Fig. 12 is a graph showing a relationship between the respective silver ion concentrations with and without the light irradiation and the numbers of bacteria. In Table 2, in the relationship between each of the silver ion concentrations with and without the light irradiation and the number of bacteria, the numbers of bacteria obtained when the light irradiation was conducted are shown with % in a case where the number of bacteria obtained when no light irradiation was conducted is supposed to be 100%.

**[Table 2]**

| | Silver ion concentration (ppb) | | |
|---|---|---|---|
| | 0 | 30 | 90 |
| With light irradiation | 83% | 73% | 53% |
| Without light irradiation | 100% | 100% | 100% |

It can be seen from the result shown in Fig. 12 and Table 2 that whereas with the silver ion concentration being 0 ppb, the number of bacteria remained almost unchanged from the initial number of bacteria regardless of presence or absence of the light irradiation, the microbicidal effect owing to the silver as well as the microbicidal effect owing to the light irradiation increased in accordance with an increase in the silver ion concentration.

Note that in this test, an intensity of ultraviolet rays included in the light emitted from the light source was 2 µW/cm² and irradiation with the ultraviolet rays alone attained no sterilization effect.

As described above, by irradiating the silver ion water with the light, the microbicidal effect of the water can be enhanced. Accordingly, the water in the water storage part is caused to include the silver based antimicrobial agent and irradiated with the light, thereby allowing the microbicidal action to be enhanced.

The described embodiment and examples are to be considered in all respects only as illustrative and not restrictive. It is intended that the scope of the invention is, therefore, indicated by the appended claims rather than the foregoing description of the embodiment and examples and that all modifications and variations coming within the meaning and equivalency range of the appended claims are embraced within their scope.

### INDUSTRIAL APPLICABILITY

A humidifier according to the present invention is capable of enhancing microbicidal and antimicrobial effects of a vaporizing part therein.

## Claims

1. A humidifier (1) comprising
a vaporizing part (500) for vaporizing water; and
a light irradiating part (700) for irradiating with light the vaporizing part (500) having applied thereto the water to be vaporized, wherein
the water vaporized from the vaporizing part (500) includes silver ions.

2. The humidifier (1) according to claim 1, comprising electrodes (611, 612) including silver, wherein
the silver ions are silver ions eluted from the electrodes (611, 612) through electrolysis.

3. The humidifier (1) according to claim 1, wherein
the light irradiated by the light irradiating part (700) includes visible light.

4. The humidifier (1) according to claim 1, comprising:
a water storage part (320) for storing the water supplied to the vaporizing part (500); and
a water storage part light irradiating part (700) for irradiating with the light the water stored in the water storage part (320), wherein
the water stored in the water storage part (320) includes the silver ions.

5. The humidifier (1) according to claim 1, comprising:
a water storage part (320) for storing the water supplied to the vaporizing part (500);
a water storage part light irradiating part (700) for irradiating with the light the water stored in the water storage part (320); and
a water supplying part for sending the water stored in the water storage part (320) to the vaporizing part (500).
